Europäisches Patentamt

European Patent Office

Office européen des brevets

(19)

(11) Veröffentlichungsnummer: **0 281 903 B1**

# (12) EUROPÄISCHE PATENTSCHRIFT

(45) Veröffentlichungstag der Patentschrift: **21.11.91**

(21) Anmeldenummer: **88103099.3**

(22) Anmeldetag: **02.03.88**

(51) Int. Cl.⁵: **B60B 3/04**, B60B 25/02, B60B 5/02

---

(54) **Mehrteilige Felge.**

---

(30) Priorität: **09.03.87 DE 3707514**
**11.06.87 DE 3719453**

(43) Veröffentlichungstag der Anmeldung:
**14.09.88 Patentblatt 88/37**

(45) Bekanntmachung des Hinweises auf die
Patenterteilung:
**21.11.91 Patentblatt 91/47**

(84) Benannte Vertragsstaaten:
**AT BE CH DE FR GB IT LI NL**

(56) Entgegenhaltungen:
**AU-D- 6 683 381**
**DE-A- 2 361 066**
**US-A- 1 492 232**
**US-A- 3 582 141**

(73) Patentinhaber: **Sport-Service-Lorinser Sportliche Autoausrüstung GmbH
Kleine Röte 2
W-7050 Waiblingen(DE)**

(72) Erfinder: **Koch, Adolf
Hasenweg 14
W-7050 Waiblingen-Neustadt(DE)**

(74) Vertreter: **Manitz, Gerhart, Dr. Dipl.-Phys. et al
MANITZ, FINSTERWALD & ROTERMUND Seelbergstrasse 23/25
W-7000 Stuttgart 50(DE)**

## Beschreibung

Die Erfindung betrifft eine mehrteilige Felge mit einem Radstern bzw. Innenteil zur Halterung der Felge an einer Achse sowie mit radial außen auf beiden Stirnseiten des Radsterns bzw. Innenteiles angeordneten ringförmigen Felgenaußenteilen, welche ein Reifenbett bilden.

Mehrteilige Felgen sind auf dem Markt erhältlich. Die mehrteilige Bauweise bietet den Vorzug, daß unterschiedliche Radsterne bzw. Innenteile nach Art eines Bausatzes mit unterschiedlichen Felgenaußenteilen kombiniert werden können, um die Felge für unterschiedliche Fahrzeuge und verschiedene Reifengrößen bzw. -breiten auszugestalten bzw. anzupassen.

Da die ungefederten Massen von Fahrzeugen, insbesondere Hochgeschwindigkeitsfahrzeugen, möglichst gering sein sollen und die Felgen einen erheblichen Anteil an den ungefederten Fahrzeugmassen bilden, ist grundsätzlich ein möglichst geringes Gewicht der Felgen erwünscht. In diesem Zusammenhang sind auch mehrteilige Felgen aus Leichtmetall auf der Basis von Aluminium und/oder Magnesium bekannt. Für extreme Einsatzzwecke ist jedoch eine weitergehende Gewichtsersparnis erwünscht. Derartiges ist aber mit üblichen Leichtmetallen nicht erreichbar.

Zwar ist es bekannt, daß höchst belastbare Bauteile bei äußerst geringem Gewicht aus Titan gefertigt werden können, wie es das Beispiel von Rotoren für Turbinen von Flugzeugen zeigt. Auch wenn es Titanlegierungen gibt, aus denen sich durch Drücken bzw. Ziehen verformbare Bleche herstellen lassen, so ist die Verarbeitung von Titanwerkstoffen gleichwohl außerordentlich aufwendig, insbesondere wenn Werkstücke mit komplizierteren Formen hergestellt werden sollen. Somit ist es zwar grundsätzlich möglich, Felgen aus Titan herzustellen, eine wirtschaftliche Fertigung läßt sich jedoch bisher nicht erreichen.

Eine Felge gemäß dem Oberbegriff des Anspruchs 1 zeigt z.B. US-A-35 82 141.

Deshalb ist es Aufgabe der Erfindung, eine wirtschaftlich herstellbare Felge zu schaffen, welche sich gegenüber bekannten, auf dem Markt erhältlichen Leichtbaufelgen durch eine deutliche Gewichtsverminderung bei sehr hoher Belastbarkeit auszeichnet.

Diese Aufgabe wird mit einer Felge der eingangs angegebenen Art dadurch gelöst, daß der Felgeninnenteil bzw. Radstern aus Titanblech geformt ist.

Die Erfindung beruht also auf dem allgemeinen Gedanken, nur den für die Stabilität der Felge besonders wesentlichen Felgeninnenteil bzw. Radstern aus Titan bzw. einem gegebenenfalls schwer zu verarbeitenden Leichtwerkstoff höchster Festigkeit herzustellen, während die Felgenaußenteile aus einem auch bei komplizierter Formgebung leichter handhabbaren Werkstoff bestehen.

Bei dieser Bauweise kann der im wesentlichen nur nach Festigkeitsgesichtspunkten bemessene Felgeninnenteil bzw. Radstern annähernd scheibenförmig oder als Teil mit relativ flachen Wölbungen bzw. einfacher Form ausgebildet sein, welche sich auf Titanblech noch mit begrenztem Kostenaufwand - z.B. durch Verformung in superplastischem Zustand -herstellen läßt.

Um der Felge ein besonders ansprechendes Design zu verleihen, kann die von der Achse abgewandte Vorderseite des Innenteiles bzw. Radsternes vollständig oder auch nur in einem Mittelbereich mit einer Blende abgedeckt sein, die bevorzugt aus dem gleichen Material wie die das Reifenbett bildenden Felgenaußenteile besteht und damit derart ausgestaltet bzw. angeordnet sein kann, daß der Eindruck eines mittragenden bzw. mit den Felgenaußenteilen tragend verbundenen Teiles erweckt wird. Gleichwohl kann die Blende als tatsächlich nichttragendes Teil ein äußerst geringes Gewicht aufweisen.

Bei dieser Bauweise kann also der aus Titan od.dgl. bestehende Felgeninnenteil bzw. Radstern ausschließlich nach technischen Gewichtspunkten gestaltet sein. Gleichwohl läßt sich das optische Erscheinungsbild der Felge durch Abänderung der Blende leicht verändern.

Eine besonders hohe Steifigkeit läßt sich bei geringer Wandstärke und entsprechend geringem Gewicht dadurch erreichen, daß der Felgeninnenteil bzw. Radstern einen zur Befestigung auf einer Radnabe bzw. einem nabenseitigen Flansch dienenden Mittelbereich aufweist, welcher gegenüber dem Außenbereich axial versetzt, beispielsweise bei Draufsicht auf die Frontseite der Felge vertieft, angeordnet ist.

Dabei setzt sich der zur Befestigung des Rades dienende, in der Regel im wesentlichen ebene Mittelbereich außen bevorzugt in eine konusförmige Zone fort, an die sich nach außen ein Ringwulst anschließt.

Der Ringwulst kann sich dann seinerseits außen in eine vorzugsweise etwa ebene Ringzone fortsetzen, welche ihrerseits am Außenumfang des Felgeninnenteiles bzw. Radsternes zu einen Stirnseite der Felge, insbesondere dessen Innenseite, abgebogen sein kann.

Darüber hinaus können insbesondere im Übergangsbereich zwischen dem Ringwulst und der daran nach außen anschließenden Ringzone Öffnungen angeordnet sein, deren Ränder zumindest an den etwa in Radialrichtung der Felge erstreckten Bereichen zur einen Seite der Felge, insbesondere zur Seite des Ringwulstes hin, ausgebogen bzw. ausgewölbt sind.

Aufgrund der oben beschriebenen Form des Felgeninnenteiles bzw. Radsternes wird eine hohe, sogenannte Beulsteifigkeit erzielt, welche auch bei geringer Wandstärke des Felgeninnenteiles bzw. Radsternes eine hohe Belastbarkeit bewirkt. Darüber hinaus ist vorteilhaft, daß die angegebene Formgebung durch Verformung von Titanblechen im superplastischen Zustand, d.h. bei Erhitzung des Bleches auf etwa 1000° C, möglich ist. Grundsätzlich können also herkömmliche, für die Blechbearbeitung bekannte Verfahren zur Verformung verwendet werden, das Titanblech muß lediglich für die Verformung zusätzlich entsprechend erhitzt werden.

Um eine möglichst hoch belastbare Verbindung des Felgeninnenteiles bzw. Radsternes mit den das Reifenbett bildenden Felgenaußenteilen zu erzielen, kann zweckmäßigerweise vorgesehen sein, daß das auf der einen Stirnseite des Felgeninnenteiles bzw. Radsternes angeordnete Felgenaußenteil eine in den umgebogenen Außenrand des Felgeninnenteiles bzw. Radsternes passenden Stirnbereich besitzt.

Zusätzlich können dieses Felgenaußenteil und/oder das auf der anderen Stirnseite des Felgeninnenteiles bzw. Radstern angeordnete Felgenaußenteil mit einer axialen Ringfläche ohne bzw. praktisch ohne radiales Spiel auf dem Außenumfangsrand des Felgeninnenteiles bzw. Radsternes, beispielsweise auf der Außenumfangsfläche des abgebogenen Außenrandes desselben, aufliegen.

Bei dieser Bauweise werden die zur Halterung der Felgenaußenteile am Felgeninnenteil bzw. Radstern dienenden Verbindungsmittel, beispielsweise Schrauben, in Radialrichtung, d.h. in Richtung besonders großer Beanspruchungen der Felge beim Fahrbetrieb, nicht belastet.

Zweckmäßig werden für das Reifenbett der erfindungsgemäßen Felge soweit möglich geeignete Bauteile herkömmlicher mehrteiliger Felgen verwendet. Dies gilt insbesondere für die die Stirnränder des Reifenbettes bildenden Felgenstirnteile. Allerdings lassen sich herkömmliche Felgenstirnteile nicht ohne weiteres am Felgeninnenteil bzw. Radstern aus Titan montieren, weil dann aufgrund der geringen Materialstärke des Titanteiles im Vergleich zu herkömmlichen Felgeninnenteilen bzw. Radsternen aus Stahl, Aluminium- bzw. ein zu schmales Reifenbett erhalten würde. Deshalb kann die Montage der die Stirnränder des Reifenbettes bildenden Felgenstirnteile zweckmäßigerweise unter Zwischenschaltung einer Ringscheibe erfolgen, welche mit einem radstern- bzw. innenteilseitigen axialen Ringsteg an ihrem Außenumfang den Außenrand des Radsternes bzw. Felgeninnenteiles ohne bzw. praktisch ohne radiales Spiel übergreift und mit einem vom Radstern bzw. Felgeninnenteil abgewandten axialen Ringsteg an ihrem Innenumfang den Innenrand eines Ringflansches jeweiligen Felgenstirnteil ohne bzw. praktisch ohne radiales Spiel untergreift.

Falls beidseitig des Felgeninnenteiles bzw. Radsternes Ringscheiben angeordnet sind, können die einander zugewandten radstern- bzw. innenteilseitigen Ringstege zusätzlich miteinander verbunden sein, beispielsweise formschlüssig mittels ineinandergreifender Stege bzw. Nuten od.dgl.

In besonders bevorzugter Weise ist vorgesehen, die genannten Ringstege unter Vorspannung der Ringscheiben gegeneinander zu verschweißen, so daß die Ringscheiben nach der Verschweißung mit entsprechender Spannung auf den Stirnseiten des Felgeninnenteiles bzw. Radsternes aus Titan od.dgl. aufliegen.

Die Felgenstirnteile können in an sich bekannter Weise mittels ringförmig angeordneter Schraubbolzen od.dgl. axial gesichert werden, die die Ringflansche der Felgenstirnteile, die Ringscheiben sowie den radial äußeren Bereich des Innenteiles bzw. Radsternes durchsetzen.

Weitere bevorzugte Merkmale der Erfindung gehen aus den Ansprüchen sowie der nachfolgenden Erläuterung eines bevorzugten Ausführungsbeispieles anhand der Zeichnung hervor.

Dabei zeigt

Fig. 1   einen ausschnittsweisen Axialschnitt einer erfindungsgemäßen Felge im Bereich der Verbindung zwischen Felgeninnenteil bzw. Radstern und den Felgenaußenteilen,

Fig. 2   einen Axialschnitt einer vollständigen Felge gemäß einer besonders bevorzugten Ausführungsform der Erfindung entsprechend der Schnittlinie II-II in Fig. 3,

Fig. 3   eine Frontansicht der in Fig. 2 dargestellten Felge entsprechend dem Pfeil III in Fig. 2, wobei jedoch im Mittelbereich der Felge eine dort anbringbare Abdeckung sowie deren Halterung weggelassen sind,

Fig. 4   einen Teilschnitt der Felge entsprechend der Schnittlinie IV-IV in Fig. 3 und

Fig. 5   einen Teilschnitt der Felge entsprechend der Schnittlinie V-V in Fig. 3.

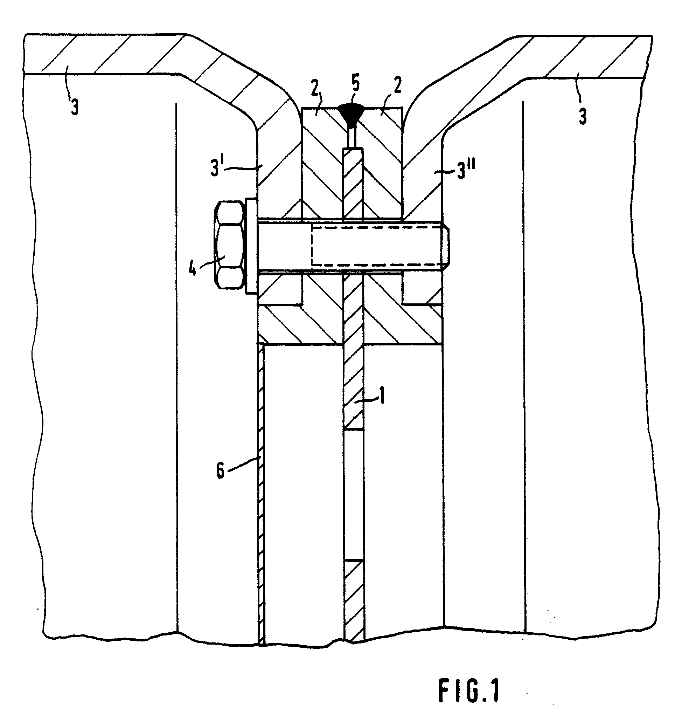

Im Beispiel der Fig. 1 ist der Felgeninnenteil bzw. Radstern als scheibenartiges Teil aus Titan ausgebildet. Aufgrund der außerordentlich hohen Belastbarkeit von Titanwerkstoffen kann der Felgeninnenteil bzw. Radstern außerordentlich dünnwandig, beispielsweise aus einem Titanblech mit einer Stärke von 1,5 mm, hergestellt sein. Aufgrund der außerordentlich einfachen, nur nach technischen Gesichtspunkten gestalteten Form läßt sich der Felgeninnenteil bzw. Radstern 1 auch aus an sich schwer verarbeitbaren Materialien, wie Titan, mit geringem Kostenaufwand herstellen. Im wesentlichen brauchen im Blech des Felgeninnenteiles bzw. Radsternes lediglich Durchbrüche und/oder Bohrungen angeordnet zu werden, die zur Belüftung von Bauteilen, insbesondere Bremsen, in der Nachbarschaft der Felgen sowie zu Befestigungszwecken dienen.

Bei den Felgenaußenteilen 3 kann es sich um herkömmliche Teile aus Leichtmetall auf der Basis von Aluminium und/oder Magnesium handeln, wie sie zur Herstellung herkömmlicher mehrteiliger Felgen aus Aluminium- bzw. Magnesiumwerkstoffen üblich sind. Die Felgenaußenteile 3 besitzen radsternseitig jeweils Ringflansche 3' bzw. 3" zur Verbindung mit dem Felgeninnenteil bzw. Radstern 1. Die von den Flanschen 3' bzw. 3" abgewandten (nicht dargestellten) Stirnrändern der Felgenaußenteile 3 sind als Felgenhorn od.dgl. ausgebildet, welches den Reifen im montierten Zustand auf der Felge gegen Abspringen sichert.

Aufgrund der geringen Wandstärke des Felgeninnenteiles bzw. Radsternes 1 gegenüber herkömmlichen Felgeninnenteilen bzw. Radsternen aus Aluminium- bzw. Magnesiumwerkstoffen können die Felgenaußenteile 3 nicht ohne weiteres unmittelbar am Felgeninnenteil bzw. Radstern 1 befestigt werden, in diesem Falle würde sich nämlich bei Verwendung herkömmlicher Felgenaußenteile 3 ein zu schmales Reifenbett ergeben. Außerdem wäre die Abstützung der Felgenaußenteile in Radialrichtung unter Umständen nicht belastbar genug.

Aus diesem Grunde sind die Felgenaußenteile 3 unter Zwischenschaltung von ringscheibenförmigen Felgenaußenteilen 2 mit dem Felgeninnenteil bzw. Radstern 1 aus Titan verbunden. Die aus herkömmlichem Leichtmetall, wie Aluminium oder Magnesium od.dgl., bestehenden Ringscheiben 2 besitzen im Bereich ihres Außenumfanges einander zugewandte axiale Ringstege, welche den Außenumfang des Felgeninnenteiles bzw. Radsternes 1 in der dargestellten Weise etwas übergreifen, und zwar ohne radiales Spiel. An ihrem radialen Innenumfang besitzen die Ringscheiben 2 vom Felgeninnenteil bzw. Radstern 1 abgewandte axiale Ringstege, welche den Innenumfang der Flansche 3' und 3" der Felgenaußenteile 3, wiederum ohne radiales Spiel, untergreifen.

Aufgrund dieser Bauweise werden die die Flansche 3' und 3" sowie die Ringscheiben 2 und den radialen Außenbereichen des Felgeninnenteiles bzw. Radsternes 1 durchsetzenden Befestigungsschrauben 4 nicht auf Scherung beansprucht, wenn die Felge bzw. die Felgenaußenteile 2 und 3 relativ zum Felgeninnenteil bzw. Radstern 1 in Radialrichtung belastet werden. Die gegenseitige Abstützung der Teile 1 bis 3 erfolgt also durch Formschluß.

Die einander zugewandten Ringstege am Außenrand der Ringscheiben 2 sind vorzugsweise mittels einer Schweißnaht 5 verbunden, welche zweckmäßigerweise unter Vorspannung der Ringscheiben 2 gegeneinander angelegt wird, beispielsweise nachdem die Schrauben 4 eingesetzt und festgezogen worden sind und die miteinander verbundenen Teile 1 bis 3 verspannen. Zusätzlich oder alternativ können an den genannten äußeren Ringstegen der Ringscheiben 2 auch ineinander eingreifende Aussparungen und Vorsprünge, beispielsweise Ringnuten und Ringstege, angeordnet sein. Alle diese Maßnahmen bewirken, daß die Ringscheiben 2 mit dem Felgeninnenteil bzw. Radstern 1 hochbelastbar verbunden sind.

In der Zeichnung sind die Gewindeteile der Schrauben 4 in Gewindebohrungen des Ringflansches 3" eingeschraubt. Stattdessen ist es auch möglich, am Ringflansch 3" wie am Ringflansch 3' gleichartige Bohrungen ohne Gewinde anzuordnen und die Schrauben in auf dem Ringflansch 3" anzuordnende Muttern od.dgl. einzudrehen.

Auf der von der nicht dargestellten Achse abgewandten Seite des Felgeninnenteiles bzw. Radsternes 1 kann innerhalb der von dem radial inneren Ringsteg der einen Ringscheibe 2 gebildeten Öffnung eine Blende 6 angeordnet werden, welche ausschließlich nach geschmacklichen Gesichtspunkten gestaltet werden kann. Dabei ist bevorzugt vorgesehen, die Blende 6 aus gleichartigem Material wie die Felgenaußenteile 2 und - insbesondere - 3 zu fertigen, und zwar derart, daß der Eindruck eines tragenden Teiles erweckt wird. Da die Blende 6 tatsächlich ein nichttragendes Bauteil ist, kann sie gleichwohl mit praktisch vernachlässigbarem Gewicht hergestellt werden. Aufgrund dieser Bauweise läßt sich das Design der Felge jederzeit ohne größeren Aufwand ändern.

Die dargestellte Felge ist nicht auf den Einsatz bei Kraftfahrzeugen beschränkt. Vorteilhaft ist auch eine Verwendung der erfindungsgemäßen Felge für Fahrgestelle von Flugzeugen.

Abweichend von der anhand der Fig. 1 beschriebenen Ausführungsform können die Ringscheiben 2 mit ihren radial äußeren Axialstegen auf dem Umfangsrand des Radsternes bzw. Innenteiles 1 aufgeschrumpft werden, indem die Ringscheiben 2 vor ihrer Montage relativ zum Radstern bzw. Innenteil erhitzt und damit aufgrund der Wärmeausdehnung etwas vergrößert werden. Bei der nachfolgenden Abkühlung setzen sich die Axialstege dann fest auf dem Außenumfang des Radsternes bzw. Innenteiles 1 auf. In entsprechender Weise können auch die Außenteile 3 mit den Innenrändern ihrer Flansche 3' und 3" auf den zugeordneten Axialstegen der Ringscheiben 2 aufgeschrumpft werden. Auf diese Weise sind alle Felgenteile ohne jedes radiale Spiel miteinander verbunden.

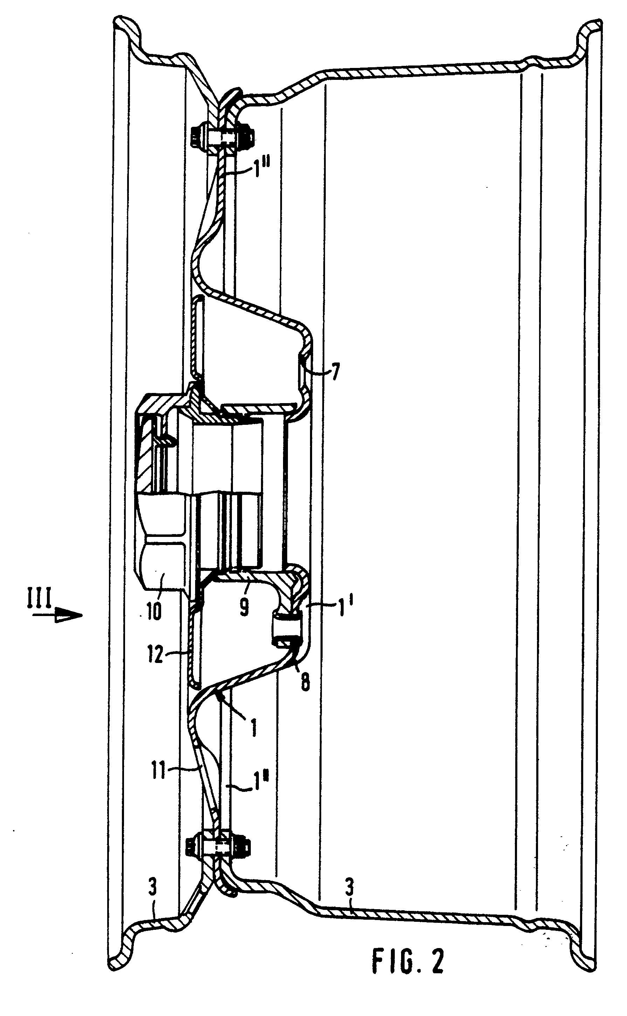

Bei der in den Figuren 2 bis 5 dargestellten Felge besitzt der Innenteil bzw. Radstern 1 eine vielfach gewölbte Form, welche auch bei geringer Wandstärke eine hohe Steifigkeit, d.h. eine sogenannte Beulsteifigkeit, mit sich bringt.

Ein flanschartiges, im wesentlichen ebenes Mittelteil 1' besitzt eine zur Aufnahme von fahrzeugseitigen Nabenteilen od.dgl. dienende Mittelöffnung, deren Rand zu der in Fig. 2 linken Vorderseite der Felge hin umgebogen ist.

Die Mittelöffnung wird konzentrisch von einer Lochreihe umgeben, wobei die Löcher 7 zur Aufnahme von Schrauben od.dgl. dienen, mit denen die Felge an einer fahrzeugseitigen Nabe bzw. einem daran angeordneten Flansch montiert werden kann. Die Ränder der Löcher 7 sind in ähnlicher Weise wie bei der Mittelöffnung zur in Fig. 2 linken Vorderseite der Felge hin umgebogen.

Zwischen den Löchern 7 sind weitere Löcher 8 angeordnet, deren Umgebung jeweils einen aus der Ebene des Mittelbereiches 1' in Richtung der Felgenvorderseite vorragenden Wulst mit dem aus der Fig. 5 ersichtlichen Profil bildet. Die Löcher 8 dienen gemäß Fig. 2 zur Aufnahme von Nieten od.dgl., mit denen ein beispielsweise aus Aluminium bestehendes zylindrisches Teil 9 an daran angeformten radialen Befestigungslaschen auf der Vorderseite der Felge befestigt ist. Der Zweck des zylindrischen Teiles 9 wird weiter unten erläutert.

An den Mittelbereich 1' schließt sich nach radial außen ein konischer Bereich an, welcher sich zur Felgenvorderseite hin öffnet und an seinem Außenrand in einen Ringwulst fortsetzt, an den sich ein im wesentlichen ebener Außenbereich 1" anschließt. Dabei ist die Ebene des Außenbereiches 1" in Achsrichtung der Felge relativ zum Mittelbereich 1' versetzt, d.h. der Mittelbereich 1' bildet relativ zur Ebene des Außenbereiches 1" bei Draufsicht auf die Vorderseite der Felge eine Vertiefung.

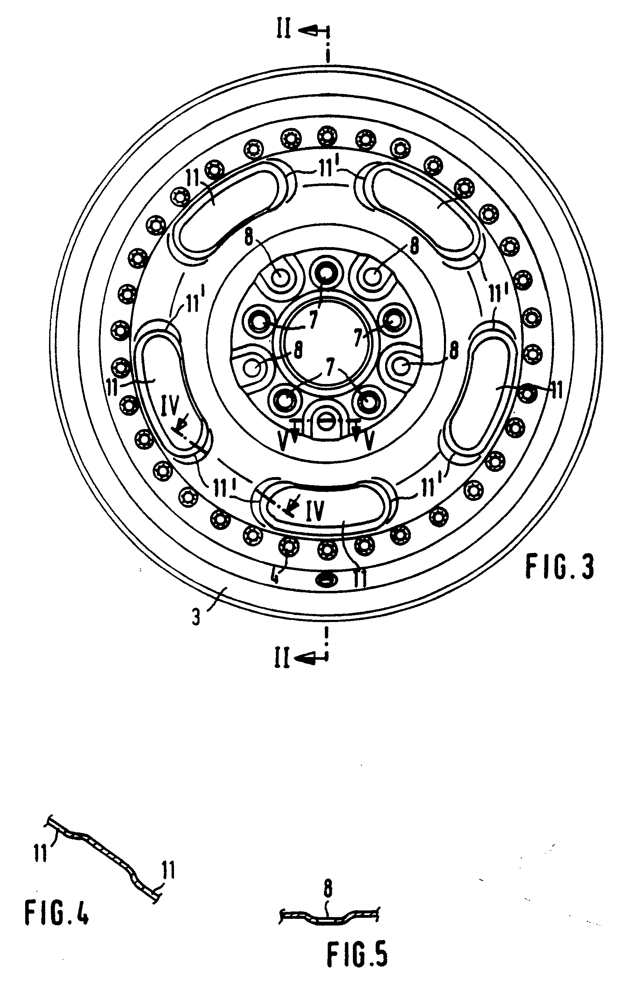

Der Außenrand des Außenbereiches 1" ist zur in Fig. 2 rechten Rückseite der Felge hin umgebogen. Im Übergangsbereich zwischen dem Ringwulst und dem Außenbereich 1" sind entsprechend der Fig. 3 konzentrisch zur Mittelöffnung der Felge mehrere ovale Öffnungen 11 angeordnet, deren Ränder zumindest an den etwa radial zum Felgenzentrum verlaufenden Bereichen 11' zur Felgenvorderseite hin (in Fig. 2 links) umgebogen sind.

Felgeninnenteile bzw. Radsterne 1 mit der oben beschriebenen Form lassen sich aus Titanblech durch Verformung im superplastischen Zustande herstellen. Der superplastische Zustand wird durch Erhitzen des Titanbleches auf ca. 1000°C erreicht, sodann kann das Titanblech in herkömmlicher Weise zur Verformung bearbeitet werden.

Am Außenrand des Felgeninnenteiles bzw. Radsternes 1 sind wiederum die das Reifenbett bildenden Felgenaußenteile 3 mittels Schraubenzieher und dazu passenden Muttern od.dgl. befestigt. Das Felgenaußenteil 3 auf der Innenseite der Felge (in Fig. 2 rechts) besitzt eine dem umgebogenen Außenrand des Felgeninnenteiles bzw. Radsternes 1 entsprechende Stirnseite, welche innerhalb des umgebogenen Randes des Felgeninnenteiles bzw. Radsternes 1 formschlüssig aufgenommen wird.

Das bereits erwähnte zylindrische Teil 9 (vgl. Fig. 2) dient zur Aufnahme eines Verschlußteiles 10, welches beispielsweise die Form einer Zentralmutter haben kann. Mit dem Verschlußteil 10 wirkt das zylindrische Teil 9 zur Halterung einer Blende 12 zusammen, welche im Beispiel der Fig. 2 lediglich den Mittelbereich 1' des Felgeninnenteiles bzw. Radsternes 1 sowie den daran anschließenden konischen Bereich bis in die Nähe des an den konischen Bereich anschließenden Ringwulstes abdeckt. Die Blende 12 kann als nichttragendes Teil außerordentlich dünnwandig und entsprechend leicht ausgebildet und ausschließlich nach ästhetischen Gesichtspunkten gestaltet sein. Abweichend von der in Fig. 2 dargestellten Ausführung kann die Blende 12 gegebenenfalls auch einen größeren Bereich der Vorderseite des Felgeninnenteiles bzw. Radsternes 1 abdecken und beispielsweise mit seinem Außenumfang an den Innenumfang des in Fig. 2 linken Felgenaußenteiles im Bereich der Schrauben 4 anschließen.

## Patentansprüche

1. Mehrteilige Felge aus Leichtwerkstoff, mit einem Radstern bzw. -innenteil (1) zur Halterung der Felge an einer Achse sowie mit radial außen an beiden Stirnseiten des Radsternes bzw. -innenteiles (1) angeordneten und mit dem Radstern bzw. -innenteil (1) verbundenen bzw. verbindbaren ringförmigen Felgenaußenteilen (3), welche ein Reifenbett bilden und aus einem leicht zu verarbeitenden Leichtwerkstoff, z.B. Aluminium, Magnesium od.dgl. bzw. Kunststoff, bestehen,
dadurch gekennzeichnet,
daß der Radstern bzw. -innenteil (1) aus Titanblech geformt ist.

2. Felge nach Anspruch 1, dadurch gekennzeichnet, daß der Felgeninnenteil bzw. Radstern (1) als im wesentlichen scheibenförmiges Teil ausgebildet ist.

3. Felge nach einem der Ansprüche 1 oder 2, dadurch gekennzeichnet, daß der Felgeninnenteil bzw. Radstern (1) durch Verformung in superelastischem Zustand herstellbar ist.

4. Felge nach einem der Ansprüche 1 bis 3, dadurch gekennzeichnet, daß der Felgeninnenteil bzw. Radstern (1) einen zur Befestigung auf einer Radnabe bzw. einem nabenseitigen Flansch dienenden Mittelbereich aufweist, welcher gegenüber dem Außenbereich axial versetzt - z.B. bei Draufsicht auf die Frontseite der Felge vertieft - angeordnet ist.

5. Felge nach einem der Ansprüche 1 bis 4, dadurch gekennzeichnet, daß sich der zur Befestigung der Felge dienende, im wesentlichen ebene Mittelbereich außen in eine konusförmige Zone fortsetzt, an die sich nach außen ein Ringwulst anschließt.

6. Felge nach Anspruch 5, dadurch gekennzeichnet, daß sich der Ringwulst außen in eine, etwa ebene Ringzone fortsetzt.

7. Felge nach einem der Ansprüche 4 bis 6, dadurch gekennzeichnet, daß außerhalb des Mittelbereiches bzw. im Übergangsbereich zwischen dem Ringwulst und der daran nach außen anschließenden Ringzone Öffnungen angeordnet sind, deren Ränder zumindest an den etwa in Radialrichtung der Felge erstreckten Bereichen zur einen Seite der Felge bzw. zur Seite des Ringwulstes hin ausgebogen sind.

8. Felge nach einem der Ansprüche 1 bis 7, dadurch gekennzeichnet, daß der Außenumfang des Felgeninnenteiles bzw. Radsternes (1) zur einen Stirnseite der Felge - insbesondere zur Innenseite - abgebogen ist.

9. Felge nach Anspruch 8, dadurch gekennzeichnet, daß das auf der einen Stirnseite - insbesondere der Innenseite -angeordnete Felgenaußenteil (3) eine in den umgebogenen Rand des Felgeninnenteiles bzw. Radsternes (1) passende Stirnseite besitzt.

10. Felge nach einem der Ansprüche 1 bis 9, dadurch gekennzeichnet, daß jedes Felgenaußenteil (2,3) durch Formschluß radial abgestützt ist, indem eine am jeweiligen Felgenaußenteil (2,3) angeordnete axiale Ringfläche ohne bzw. praktisch ohne radiales Spiel auf dem Außenumfangsrand des Innenteiles bzw. Radsterns (1) oder einer Gegenringfläche eines weiteren Felgenaußenteiles (2) sitzt bzw. aufliegt, welches seinerseits den Außenumfangsrand des Innenteiles bzw. Radsterns (1) ohne bzw. praktisch ohne radiales Spiel mit einer axialen Ringfläche über- bzw. umgreift.

11. Felge nach einem der Ansprüche 1 bis 10, dadurch gekennzeichnet, daß die die Stirnränder des Reifenbettes bildenden Felgenstirnteile (3) am Radstern bzw. Innenteil (1) unter Zwischenschaltung von Ringscheiben (2) angeordnet sind, welche mit einem radstern- bzw. innenteilseitigen axialen Ringsteg an ihrem Außenumfang den Außenrand des Radsternes bzw. Felgeninnenteiles (1) ohne bzw. praktisch ohne radiales Spiel übergreifen und mit einem vom Radstern bzw. Felgeninnenteil (1) abgewandten axialen Ringsteg an ihrem Innenumfang den Innenrand eines Ringflansches (3',3") der Felgenstirnteile (3) ohne bzw. praktisch ohne radiales Spiel untergreifen.

12. Felge nach einem der Ansprüche 1 bis 11, dadurch gekennzeichnet, daß die einander zugewandten radstern- bzw. innenteilseitigen Ringstege miteinander verbunden sind.

13. Felge nach Anspruch 12, dadurch gekennzeichnet, daß die Ringstege unter Vorspannung der Ringscheiben (2) gegeneinander bzw. gegen den Felgeninnenteil bzw. Radstern (1) miteinander verschweißt sind.

14. Felge nach einem der Ansprüche 1 bis 13, dadurch gekennzeichnet, daß die Felgenstirnteile (3) mittels ringförmig angeordneter Schraubbolzen (4) axial gesichert sind, die die Ringflansche (3',3") der Felgenstirnteile (3), die Ringscheiben (2) sowie den radial äußeren Bereich des Innenteiles bzw. Radsternes (1) durchsetzt.

15. Felge mit einem Radstern bzw. Innenteil zur Halterung der Felge an einer Achse sowie mit radial außen an beiden Stirnseiten des Radsternes bzw. Innenteiles angeordneten ringförmigen Felgenaußenteilen, welche ein Reifenbett bilden, nach einem der Ansprüche 1 bis 14,
dadurch gekennzeichnet, daß die von der Achse abgewandte Seite des Innenteiles bzw. Radsternes (1) mit einer Blende (6) abgedeckt ist.

16. Felge nach Anspruch 15, dadurch gekennzeichnet, daß die Blende (6) aus gleichem Material wie die Felgenaußenteile (3) besteht.

## Claims

1. Multi-part tyre rim of light-weight material, comprising a wheel spider or inner part (1) for holding the rim on an axle, and ring-shaped rim outer parts (3) arranged radially outwardly at both end faces of the wheel spider or inner part (1) and attached to or attachable to the wheel spider or inner part (1), said outer parts forming a tyre bed or well and being made of an easily formable light-weight material, for example of aluminum, magnesium or the like, or of plastic, characterised in that the wheel spider or inner part (1) is made of titanium sheet.

2. A rim according to claim 1, characterised in that the rim inner part or wheel spider (1) is formed as an essentially disc-shaped part.

3. A rim according to claim 1 or 2, characterised in that the rim inner part or wheel spider (1) can be produced by deformation in the superelastic state.

4. A rim according to any one of the claims 1 to 3, characterised in that the rim inner part or wheel spider (1) comprises a central region serving for the attachment to a wheel hub or to a hub-side flange, the central region being arranged axially offset with respect to the outer region - for example recessed when seen from the front side of the rim.

5. A rim according to any one of claims 1 to 4, characterised in that the essentially planar central region which serves for the attachment of the rim continues outwardly into a conically-shaped region, which is adjoined outwardly by a ring bead.

6. A rim according to claim 5, characterised in that the ring bead extends outwardly into an approximately planar ring region.

7. A rim according to any one of claims 4 to 6, characterised in that openings are arranged outwardly of the central region or in the transition region between the ring bead and the ring region which extends outwardly therefrom, the edges of said openings being bent out towards one side of the rim or towards the side of the ring bead, at least in the regions extending approximately in the radial direction of the rim.

8. A rim according to any one of claims 1 to 7, characterised in that the outer periphery of the rim inner part or wheel spider (1) is curved towards one end face of the rim - in particular the inner face.

9. A rim according to claim 8, characterised in that the rim outer part (3) arranged on one end face - in particular the inner face - has an end face which fits in the bent-over border of the rim inner part or wheel spider (1).

10. A rim according to any one of claims 1 to 9, characterised in that each rim outer part (2, 3) is supported radially by form-locking means, wherein an axial ring face arranged on the respective rim outer part (2, 3) seats or engages without, or practically without, radial play against the outer peripheral edge of the inner part or wheel spider (1) or against a counter ring face of a further rim outer part (2), which in turn has an axial ring face which engages without, or practically without, radial play over or around the outer peripheral edge of the inner part or wheel spider (1).

11. A rim according to any one of claims 1 to 10, characterised in that the end parts (3) of the rim forming the end faces of the tyre bed are mounted on the wheel spider or inner part (1) with interposition of ring discs (2), which have an axial ring web at their outer periphery and on the side of the wheel spider or inner part, with the outer ring webs engaging over the outer edge of the wheel spider or rim inner part (1) without, or practically without, radial play, and with the ring discs having an axial ring web at their inner periphery and on the side remote from the wheel spider or rim inner part (1), the inner ring webs engaging under the inner edge of a ring flange (3', 3") of the end parts (3) of the rim without, or practically without, radial play.

12. A rim according to any one of claims 1 to 11, characterised in that the confronting ring webs on the side of the wheel spider or inner part are mutually connected.

13. A rim according to any one of claims 1 to 3, characterised in that the ring webs are welded together with the ring discs (2) being prestressed against each other or against the rim inner part or wheel spider (1).

14. A rim according to any one of claims 1 to 13, characterised in that the end parts (3) of the rim are secured axially by means of screws (4) arranged in circular fashion, which pass through the ring flanges (3', 3") of the end parts (3) of the rim, the ring discs (2) and the radially outer region of the inner part or wheel spider (1).

15. A rim comprising a wheel spider or inner part for holding the rim on an axle, and ring-shaped rim outer parts arranged radially outwardly at both end faces sides of the wheel spider or inner part and forming a tyre bed, according to any one of claims 1 to 14, characterised in that the side of the inner part or wheel spider (1) remote from the axle is covered by a cap (6).

16. A rim according to claim 15, characterised in that the cap (6) is made of the same material as the rim outer parts (3).

**Revendications**

1. Jante en matériau léger constituée en plusieurs parties, comprenant un croisillon de roue ou partie intérieure de roue (1) destiné au maintien de la jante sur un arbre, et des parties extérieures annulaires de jante (3) montées radialement à l'extérieur sur les deux côtés frontaux du croisillon de roue ou partie intérieure de roue (1) et fixées ou capables de l'être sur le croisillon de roue (1), lesdites parties extérieures de jante formant un lit de pneumatique et consistant en un matériau léger facile à travailler, par exemple de l'aluminium, du magnésium ou similaire, ou encore une matière plastique, caractérisée en ce que le croisillon de roue (1) ou partie intérieure de roue est formé en tôle de titane.

2. Jante selon la revendication 1, caractérisée en ce que le croisillon de roue ou partie intérieure de jante (1) est réalisé sous la forme d'une partie essentiellement en forme de disque.

3. Jante selon l'une des revendications 1 ou 2, caractérisée en ce que le croisillon de roue (1) peut être produit par déformation à l'état superélastique.

4. Jante selon l'une des revendications 1 à 3, caractérisée en ce que le croisillon de roue (1) comprend une zone centrale servant à la fixation sur un moyeu de roue ou sur un flasque côté moyeu, ladite zone centrale étant décalée axialement par rapport à la zone extérieure, par exemple en renfoncement sur le côté frontal de la jante en vue de dessus.

5. Jante selon l'une des revendications 1 à 4, caractérisée en ce que la zone centrale essentiellement plane qui sert à la fixation de la jante se prolonge vers l'extérieur par une zone de forme conique, à laquelle se raccorde extérieurement un talon annulaire.

6. Jante selon la revendication 5, caractérisée en ce que le talon annulaire se prolonge à l'extérieur par une zone annulaire pratiquement plane.

7. Jante selon l'une des revendications 4 à 6, caractérisée en ce que des ouvertures sont disposées à l'extérieur de la zone centrale ou dans la zone de transition entre le talon annulaire et la zone annulaire qui s'y raccorde extérieurement, les bordures desdites ouvertures étant courbées en direction d'un côté de la jante, ou du côté du talon annulaire, au moins dans les régions qui s'étendent approximativement en direction radiale de la jante.

8. Jante selon l'une des revendications 1 à 7, caractérisée en ce que la circonférence extérieure de la partie intérieure de jante ou croisillon de roue (1) est recourbée en éloignement de l'un des côtés frontaux de la jante - en particulier le côté intérieur.

9. Jante selon la revendication 8, caractérisée en ce que la partie extérieure de jante (3) disposée sur l'un des côtés frontaux - en particulier le côté intérieur - possède un côté frontal reçu dans la bordure recourbée de la partie intérieure de jante ou croisillon de roue (1).

10. Jante selon l'une des revendications 1 à 9, caractérisée en ce que chaque partie extérieure de jante (2, 3) est supportée radialement par verrouillage de forme, par le fait qu'une surface annulaire axiale disposée sur la partie extérieure respective de jante (2, 3) est en contact ou en engagement sans jeu, ou pratiquement sans jeu radial contre la bordure circonférentielle de la partie intérieure ou croisillon de roue (1) ou d'une contre-surface annulaire d'une autre partie extérieure de jante (2), laquelle enveloppe ou entoure de son côté la bordure circonférentielle extérieure de la partie intérieure ou croisillon de roue (1) sans jeu, ou pratiquement sans jeu radial avec une surface annulaire axiale.

11. Jante selon l'une des revendications 1 à 10, caractérisée en ce que les parties frontales de jante (3) formant les bordures frontales du lit de pneumatique sont disposées sur le croisillon de roue ou partie intérieure (1) avec interposition de disques annulaires (2), lesquels engagent par l'extérieur sans jeu, ou pratiquement sans jeu radial la bordure extérieure du croisillon de roue ou partie intérieure de jante par l'extérieur avec une nervure annulaire axiale sur leur circonférence extérieure du côté du croisillon de roue ou pièce intérieure (1) et engagent par l'intérieur sans jeu, ou pratiquement sans jeu radial la bordure intérieure d'une bride annulaire (3', 3") des parties frontales de la jante (3) avec une nervure annulaire axiale sur leur circonférence intérieure du côté opposé au croisillon de roue ou partie intérieure de jante (1).

12. Jante selon l'une des revendications 1 à 11, caractérisée en ce que les nervures annulaires tournées l'une vers l'autre du côté du croisillon de roue ou partie intérieure sont mutuellement reliées.

13. Jante selon la revendication 12, caractérisée en ce que les nervures annulaires sont mutuellement soudées sous prétension des disques annulaires (2) l'un contre l'autre ou contre la partie intérieure de jante ou croisillon de roue (1).

14. Jante selon l'une des revendications 1 à 13, caractérisée en ce que les parties frontales de jante (3) sont maintenues axialement au moyen de boulons (4) agencés suivant un cercle, qui traversent les flasques annulaires (3', 3") des parties frontales de jante (3), les disques annulaires (2) et la région radiale extérieure de la partie intérieure ou croisillon de roue (1).

15. Jante comprenant un croisillon de roue ou partie intérieure destiné à maintenir la jante sur un arbre, et des parties extérieures de jante annulaires agencées radialement à l'extérieur sur les deux côtés frontaux du croisillon de roue ou partie intérieure, lesdites parties extérieures formant un lit de pneumatique, selon l'une des revendications 1 à 14, caractérisée en ce que le côté de la partie intérieure ou croisillon de roue (1) opposé à l'arbre est couvert par un écran (6).

16. Jante selon la revendication 15, caractérisée en ce que l'écran (6) est réalisé dans le même matériau que les parties extérieures de jante (3).

FIG.1

FIG. 2

FIG.3

FIG.4

FIG.5